# DEMANDE DE BREVET EUROPEEN

(11) **EP 1 659 060 A1**
(43) Date de publication de la demande: **24.05.2006**
(21) Numéro de dépôt: 05111112.8
(22) Date de dépôt: 22.11.2005
(51) Int. Cl.: B64D 7/08, F15B 15/17

(54) **Mecanisme de separation d'une charge d'un aéronef**

(30) Priorité: 23.11.2004 FR 0452729
(71) Demandeur: MBDA France, 75016 Paris (FR)
(72) Inventeur: Bohas, Jean-Claude, 92140, CLAMART (FR); Rauscher, Etienne, 92120, MONTROUGE (FR); Gassemann, Pierre, 18400, SAINT FLORENT SUR CHER (FR)
(74) Mandataire: Poulin, Gérard

(57) **Abrégé**

Le mécanisme de séparation d'une charge d'un aéronef en prélude à son largage est caractérisé en ce que le vérin d'actionnement (8) a un piston muni de perçages et de portions de tiges de largeurs inégales. Quand la pression s'est égalisée dans les deux portions de chambres (10, 11), le différentiel de forces sur le piston (12) ramène la tige dans sa position initiale sans autre moyen de rappel.

## Description

Le sujet de cette invention est un mécanisme séparant d'un aéronef une charge à larguer, pouvant être un missile ou une charge inerte suspendue à un parachute.

Le largage de telles charges s'effectue par l'ouverture d'un système d'accrochage ; qui doit être suivie d'une opération de séparation dans laquelle la charge est éloignée de la structure de l'aéronef pour diminuer les risques d'accident. La charge est poussée ou écartée de l'aéronef par une paire d'embiellages qui sont mis en mouvement par un actionneur pour les basculer et obtenir la séparation souhaitée.

L'ensemble forme le mécanisme de séparation.

L'actionneur est souvent un vérin à gaz alimenté par une source de gaz sous pression provenant généralement d'une charge pyrotechnique. Les gaz entrant dans la chambre du vérin y déplacent un piston relié à une tige du vérin qui est elle-même reliée aux embiellages ou à l'un deux.

Un système de rappel doit être prévu pour ramener les embiellages dans l'aéronef après le largage de la charge. Il peut comprendre des ressorts ou consister en une conception particulière des embiellages. Les conceptions connues impliquent toujours une complication du mécanisme, qu'on évite avec l'invention, où les moyens mêmes qui assurent la séparation sont aménagés de façon à assurer aussi le ravalement (retour) du système d'accrochage à sa première position.

Dans celle-ci, la tige du piston a une section plus grande dans une des portions de la chambre cylindrique du vérin, dans laquelle débouche la source de gaz sous pression, et le piston est muni de perçages faisant communiquer cette portion avec la portion opposée et complémentaire de la chambre. Le gaz sous pression exerce d'abord son rôle habituel de déplacement du piston dans un sens de déploiement des embiellages afin d'accomplir la séparation de la charge et de l'aéronef ; à mesure que le gaz traverse le piston par les perçages et pénètre dans l'autre portion de chambre, un équilibre des forces finit par être atteint, puis dépassé quand les pressions des deux chambres sont égalisées, puisque la surface du piston qui est disposée dans la portion de chambre dans laquelle débouche la source de gaz est plus petite : le gaz ramène le piston à sa position de départ avec une force relativement faible mais suffisante pour entraîner les embiellages après que la charge a été larguée.

Dans une conception avantageuse, le mécanisme comprend un obturateur des perçages du piston comprenant des bouchons et des tiges traversant le piston de façon coulissante, reliées aux bouchons et dirigées vers une face de butée du vérin située dans la portion de la chambre dans laquelle ne débouche pas la source de gaz sous pression. Le piston est alors continu pendant la plus grande partie de sa course d'allée, dans laquelle il déploie les embiellages ; puis les tiges touchent la face de butée, coulissent dans le piston et repoussent les bouchons en ouvrant les perçages, ce qui permet à l'égalisation des pressions de s'instaurer. Dans cette conception, les perçages ne contrarient pas le mouvement du vérin provoquant le déploiement des embiellages.

L'invention sera maintenant décrite en référence aux figures :
- la figure 1 est une vue générale du mécanisme,
- la figure 2 est une vue particulière représentant le vérin d'actionnement,
- et la figure 3 est une vue de détail de l'obturateur des perçages du piston du vérin.

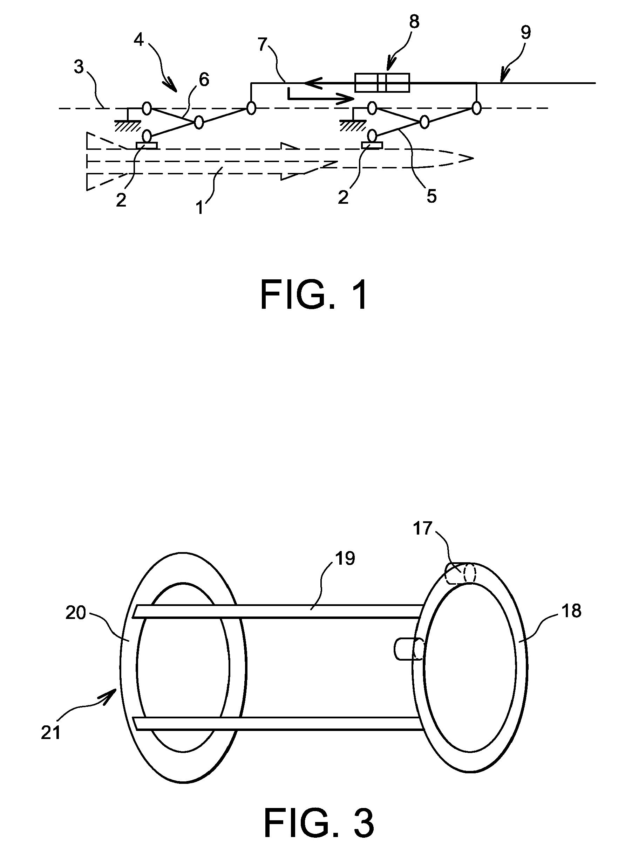

La figure 1 représente un mécanisme de séparation de façon schématique. Un missile 1 est en contact ou en appui sur une paire de patins 2 sous un aéronef 3 qui n'est pas représenté en détail. Chacun des patins 2 dépend d'un embiellage 4 comprenant une bielle principale 5 et une bielle d'arc-boutement 6. La bielle principale 5 est articulée à ses extrémités opposées au patin 2 à une extrémité d'une tige 7 d'un vérin 8, et à son milieu à la bielle d'arc-boutement 6, dont l'autre extrémité est articulée à l'aéronef 3. Les embiellages 4 sont semblables entre eux. On a choisi d'en représenter une conception particulièrement simple. Bien d'autres peuvent convenir et seront peut-être préférées pour être associées aux éléments originaux de l'invention. Le déplacement de la tige 7 vers la gauche en coulissant parallèlement à l'aéronef 3 repousse les bielles principales 5 et les incline en raison de l'arc-boutement par les bielles 6 :les patins 2 s'abaissent et accomplissent la séparation du missile 1 et de l'aéronef 3.

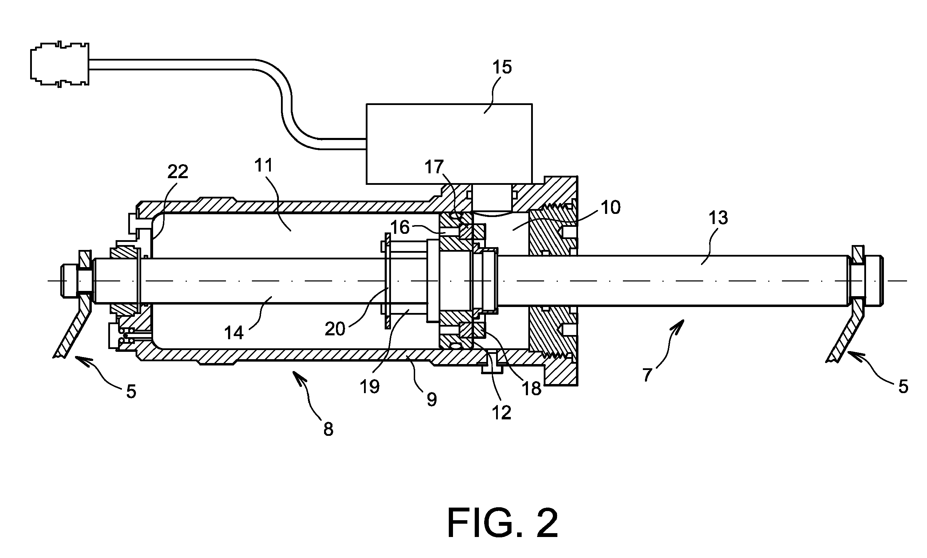

D'après la figure 2, le vérin 8 comprend un boîtier 9 enclosant une chambre cylindrique comprenant deux portions complémentaires 10 et 11 de volumes variables, que sépare un piston 12 coulissant en frottant avec une étanchéité sur le boîtier 9. La tige 7 est fixée au piston 12, qui l'entraîne. Elle comprend une portion épaisse 13 du côté de la portion de chambre 10 et une portion fine 14 du côté de la portion de chambre 11. Les deux portions de tige 13 et 14 traversent le boîtier 9 et les bielles principales 5 sont respectivement articulées à leurs extrémités. Une charge pyrotechnique 15 est utilisée pour commander la séparation et débouche dans la portion de chambre 10. Dans la position de départ, où les embiellages 4 sont repliés et la charge 1 est contre l'aéronef, le piston 12 est à la position représentée sur la figure 2, à droite du boîtier, et la portion de chambre 10 est beaucoup plus petite que l'autre. Quand la charge pyrotechnique 15 est mise à feu, une grande quantité de gaz pénètre dans la portion de chambre 10 et sa pression repousse le piston 12 vers la gauche, déployant des embiellages 4.

Le piston 12 est muni de perçages 16 qui le traversent sur toute son épaisseur et font donc communiquer les portions de chambres 10 et 11 entre elles. Des bouchons 17 obturent les perçages 16 au commencement du procédé. Ils sont assujettis à une couronne 18, de même que des tiges 19 qui alternent avec eux, et s'étendent aussi à travers le piston 12 par d'autres perçages non représentés. Les tiges 19 s'étendent jusque dans la portion de chambre 11 et sont unies par une deuxième couronne 20. L'ensemble forme un obturateur 21 représenté en isolé à la figure 3. Dans une conception plus simple, la couronne 18 obture elle-même les perçages 16.

Quand le piston se déplace vers la gauche sous l'influx de gaz sous pression, l'obturateur 21 l'accompagne jusqu'à ce que l'extrémité des tiges 19 touche une face de butée 22 qui leur fait face dans la portion de chambre 11 (il s'agit ici d'une face d'extrémité du boîtier 9). L'obturateur 21 est retenu mais le piston 12 continue son mouvement en arrachant les bouchons 17 des perçages 16. Le gaz s'engouffre alors dans la portion de chambre 11 jusqu'à ce que les pressions s'égalisent dans les deux portions 10 et 11. Comme la portion 14 de tige est plus fine que la portion 13 située dans la portion de chambre 10 où débouche la charge pyrotechnique 15, un déséquilibre des forces de pression s'exerce sur le piston 12 et le ramène vers la droite jusqu'à sa position de départ en provoquant le relèvement des embiellages 4 dès que la charge est larguée. L'obturateur 21 ne bouge plus par rapport au piston 12 dans ce mouvement de retour.

On constate que le système de rappel consiste en une modification mineure du vérin 8 déjà employé dans les mécanismes antérieurs et n'implique pas d'addition de pièces volumineuses ni d'aménagement particulier dans les embiellages 4.

## Revendications

1. Mécanisme de séparation d'une charge d'un aéronef (3), comprenant une paire d'embiellages (4), terminés par un patin (2) d'appui de la charge (1) et un actionneur comprenant un vérin (8) et une source de gaz (15) sous pression reliée à une chambre cylindrique du vérin, une tige de vérin étant reliée à au moins un des embiellages, **caractérisé en ce qu'**un piston (12) du vérin, lié à la tige et coulissant dans la chambre cylindrique, est muni de perçages (16) faisant communiquer deux portions (10, 11) de la chambre opposées par le piston, et **en ce que** la tige (13, 14) a une section plus grande dans une des portions de la chambre dans laquelle débouche la source de gaz sous pression.

2. Mécanisme selon la revendication 1, **caractérisé en ce que** la tige sort du vérin par deux côtés extrêmes et opposés de la chambre cylindrique et possède des extrémités reliées respectivement aux embiellages.

3. Mécanisme selon l'une quelconque des revendications 1 ou 2, **caractérisé en ce qu'**il comprend un obturateur (21) des perçages du piston comprenant des bouchons (17) et des tiges traversant le piston de façon coulissante, reliées aux bouchons et dirigées vers une face de butée du vérin située dans la portion de la chambre dans laquelle ne débouche pas la source de gaz sous pression.
